# FASCICULE DE BREVET EUROPEEN

(11) **EP 3 376 832 B1**
(45) Date de publication et mention de la délivrance du brevet: **01.01.2020**
(21) Numéro de dépôt: 18160481.0
(22) Date de dépôt: 07.03.2018
(51) Int. Cl.: B60Q 1/04, H05B 33/08

(54) **DISPOSITIF ET PROCEDE DE PILOTAGE DE SOURCES LUMINEUSES D'UN VEHICULE AUTOMOBILE**
STEUERVORRICHTUNG UND -VERFAHREN FÜR LEUCHTQUELLEN EINES KRAFTFAHRZEUGS
DEVICE AND METHOD FOR CONTROLLING LIGHT SOURCES OF A MOTOR VEHICLE

(30) Priorité: 15.03.2017 FR 1752121
(43) Date de publication de la demande: 19.09.2018
(73) Titulaire: Valeo Vision, 93012 Bobigny Cedex (FR)
(72) Inventeur: JAUREGI, Irantzu, 93012 BOBIGNY Cedex (FR); DAROUSSIN, Samuel, 93012 BOBIGNY CEDEX (FR); BAKARY, Silas, 93012 BOBIGNY Cedex (FR)
(74) Mandataire: Valeo Vision

(56) Documents cités:
- DE-A1-102013 226 964

## Description

L'invention a trait au domaine des projecteurs d'éclairage, notamment pour véhicule automobile. L'invention concerne en particulier un système d'alimentation électrique des sources lumineuses d'un tel projecteur, les sources lumineuses étant des sources à élément semi-conducteur, dont la mise à disposition d'une information de BIN est nécessaire pour la configuration du projecteur, et dont une information sur leur température est nécessaire pour fournir un courant électrique d'alimentation adapté.

Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil d'intensité de courant. Ce courant direct (« forward current ») maximal est en général décroissant à température croissante. De même, lorsqu'une LED émet de la lumière, on observe à ses bornes une chute de tension égale à sa tension directe (« forward voltage »). Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... Les composants LEDs issus d'un même procédé de production peuvent néanmoins présenter des caractéristiques (capacité d'émission, tension directe, ...) différentes. Afin de regrouper les composants ayant des caractéristiques semblables, les LEDs produites sont triées par groupes, appelés également BIN, chaque BIN regroupant des LEDs ayant des caractéristiques semblables.

Il est connu dans l'art, par exemple du document de brevet DE102013226964, d'utiliser un circuit de pilotage pour piloter l'alimentation électrique d'un ensemble ou groupe de LEDs. Le circuit définit le courant électrique appliqué à une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir une alimentation constante, des circuits de pilotage connus utilisent différents types de convertisseurs, DC/DC, linéaire, résistif, etc, ... pour convertir le courant électrique continu fourni par exemple par une batterie de voiture en un courant continu de charge, apte à alimenter les LEDs en question. Le courant électrique à fournir dépend du BIN des LEDs à alimenter. C'est pourquoi il est, selon des procédés d'assemblages connus, nécessaire d'obtenir l'information de BIN qui correspond aux LEDs utilisées, pour programmer ou régler correctement le circuit de pilotage utilisé pour alimenter les LEDs en courant électrique.

De même, le courant direct d'une LED dépend de sa température de jonction semi-conductrice. De manière connue, l'information de BIN est codée à l'aide d'une résistance d'une valeur prédéterminée, disposée sur le circuit imprimé qui supporte les LEDs en question, en isolation de la branche de charge qui regroupe les sources lumineuses. Une indication de la température des LEDs peut de manière connue être obtenue en plaçant un élément thermistor sur un circuit imprimé en proximité physique des LEDs, la chute de tension aux bornes duquel étant mesurable. Le circuit de pilotage de l'alimentation de ces LEDs est connecté par des fils de connexion dédiés au circuit imprimé supportant les LEDs pour obtenir la valeur de la résistance en question, et pour en déduire l'information de BIN et l'information sur la température. Avec le nombre de fonctions lumineuses croissant implémentés par des LEDs, le nombre de câbles de connexion reliant le/les circuits de pilotage de l'alimentation aux circuits imprimés supportant les LEDs en question s'accroît donc rapidement dans le but de relayer les informations BIN, température et autres de manière requise. Ceci engendre d'une part des coûts importants lors de la production de projecteurs pour véhicules automobiles, et d'autre part des contraintes de conception importantes, puisque l'espace limité dans lequel tous les modules d'un dispositif lumineux doivent être logés se voit restreint par ce câblage. L'invention a pour objectif de pallier à au moins un des problèmes posés par l'art antérieur. Plus précisément, l'invention a pour objectif de réduire le nombre de connexions entre le/les circuits de pilotage de l'alimentation et les circuits imprimés qui supportent les sources lumineuses à alimenter, tout en assurant une mise à disposition de toutes les informations et caractéristiques des sources lumineuses, nécessaires à la configuration du/des circuits de pilotage.

L'invention a pour objet un système d'alimentation électrique d'au moins une source lumineuse à élément semi-conducteur d'un véhicule automobile. Le système comprend des moyens de pilotage de l'alimentation électrique de ladite source lumineuse, configurés pour fournir un courant électrique à ladite source lumineuse, l'intensité du courant électrique fourni étant fonction d'une valeur BIN de la source et de la température de l'environnement de la source. Le système comprend également un circuit électronique indépendant de ladite source lumineuse, comprenant un premier composant dont une caractéristique mesurable est représentative de ladite valeur BIN de la source, et un deuxième composant dont une caractéristique mesurable est fonction de la température de l'environnement de la source lumineuse. Les moyens de pilotage sont agencés pour déterminer lesdites caractéristiques du premier et deuxième composant via un unique fil électriquement conducteur reliant les moyens de pilotage au circuit électronique.

De manière préférée, l'unique fil électriquement conducteur reliant les moyens de pilotage au circuit électronique peut être adapté à alimenter ce dernier en courant électrique.

Le circuit électronique peut comprendre un montage en parallèle d'une première branche comprenant le premier composant, et d'une deuxième branche comprenant le deuxième composant. Au moins une des branches comprend un montage sélecteur monté en série et en amont dudit premier/deuxième composant, le montage sélecteur étant configuré pour laisser passer un courant électrique traversant le circuit électronique de manière sélective par ladite branche, en fonction d'une caractéristique du courant électrique. Les moyens de pilotage comprennent des moyens de lecture desdites caractéristiques du premier et deuxième composant, configurés pour injecter de manière sélective un courant électrique ayant une caractéristique prédéterminée dans le circuit électronique.

Chacune des branches du montage en parallèle peut de manière préférentielle comprendre un montage sélecteur comprenant respectivement une première et une deuxième diode laissant uniquement passer un courant électrique d'une polarité donnée, les diodes des deux branches laissant passer des courants électriques de polarités inverses. Les moyens de lecture desdites caractéristiques du premier et deuxième composant peuvent de préférence être configurés pour :
- mesurer la chute de tension aux bornes dudit circuit électronique, lorsqu'un courant électrique d'une intensité prédéterminée et d'une première polarité passant par la première diode, le traverse ;
- déduire la valeur de la caractéristique du premier composant à partir de la chute de tension mesurée ;
- enregistrer la valeur de la caractéristique du premier composant, représentative de la valeur BIN de la source lumineuse, dans un premier élément de mémoire.

De préférence, les moyens de lecture peuvent en outre être configurés pour :
- mesurer la chute de tension aux bornes dudit circuit électronique, lorsqu'un courant électrique d'une intensité prédéterminée et d'une deuxième polarité, inverse de la première polarité et passant par la deuxième diode, le traverse ;
- déduire la valeur de la caractéristique deuxième composant à partir de la chute de tension mesurée ;
- enregistrer la valeur de la caractéristique du deuxième composant, représentative de la température de l'environnement de la source lumineuse au moment de la mesure, dans un deuxième élément de mémoire.

Au moins une des branches du montage en parallèle peut comprendre un montage sélecteur qui comprend une capacité laissant passer uniquement un courant électrique d'une fréquence prédéterminée, les fréquences pour les deux branches étant différentes. Les moyens de lecture desdites caractéristiques du premier et deuxième composant peuvent de préférence être configurés pour :
- mesurer la chute de tension aux bornes dudit circuit électronique, lorsqu'un courant électrique d'une intensité prédéterminée et d'une première fréquence passant le montage sélecteur de la première branche, le traverse ;
- déduire la valeur de la caractéristique du premier composant à partir de la chute de tension mesurée ;
- enregistrer la valeur de la caractéristique du premier composant, représentative de la valeur BIN de la source lumineuse, dans un premier élément de mémoire.

De manière préférée, les moyens de lecture peuvent en outre être configurés pour :
- mesurer la chute de tension aux bornes dudit circuit électronique, lorsqu'un courant électrique d'une intensité prédéterminée et d'une deuxième fréquence passant par le montage sélecteur de la deuxième branche, le traverse ;
- déduire la valeur de la caractéristique deuxième composant à partir de la chute de tension mesurée ;
- enregistrer la valeur de la caractéristique du deuxième composant, représentative de la température de l'environnement de la source lumineuse au moment de la mesure, dans un deuxième élément de mémoire.

De préférence, uniquement la première branche du montage en parallèle, comprenant le premier composant ayant une caractéristique représentative de la valeur BIN de la source lumineuse, peut comprendre ledit montage sélecteur.

Les sources lumineuses peuvent de manière préférée comprendre des diodes électroluminescentes, LED, des diodes électroluminescentes organiques, OLED, ou des diodes laser.

De préférence, le premier composant peut être une résistance dont la valeur ohmique est représentative de la valeur BIN de la source lumineuse.

De préférence, le deuxième composant peut être un thermistor dont la valeur ohmique dépend de la température du composant. Les caractéristiques résistance/température du thermistor peuvent de préférence être préenregistrées dans un élément de mémoire des moyens de pilotage.

De préférence, le thermistor peut présenter une résistance variable qui augmente lorsque sa température augmente. Alternativement, la résistance du thermistor peut diminuer lorsque sa température augmente.

De manière préférée, les moyens de lecture peuvent comprendre un élément microcontrôleur et/ou un convertisseur analogique/digital.

De préférence, les moyens de lecture peuvent être reliés à plusieurs circuit électroniques comprenant chacun des composants dont les caractéristiques respectives sont représentatives des valeurs BIN et de la température de l'environnement de sources lumineuses distinctes. Les sources lumineuses distinctes peuvent de préférence être adaptées à réaliser des fonctions lumineuses distinctes du véhicule automobile.

L'invention a également pour objet un module lumineux pour un véhicule automobile comprenant au moins une source lumineuse à élément semi-conducteur et un système d'alimentation électrique de ladite source lumineuse. Le module lumineux est remarquable en ce que le système d'alimentation électrique est conforme à l'invention.

Selon un mode de réalisation non couvert par l'invention, procédé d'alimentation électrique d'au moins une source lumineuse à élément semi-conducteur moyennant un système d'alimentation, dans lequel les moyens de pilotage de l'alimentation électrique comprennent des moyens de lecture desdites caractéristiques du premier et deuxième composant. Le procédé comprend les étapes suivantes :
a) à une première température prédéterminée, pour laquelle la caractéristique du deuxième composant est connue, mesurer la chute de tension aux bornes dudit circuit électronique, lorsqu'un courant électrique d'une intensité prédéterminée le traverse ;
b) déduire la valeur de la caractéristique du premier composant à partir de la chute de tension mesurée et de la caractéristique du deuxième composant ;
c) enregistrer la valeur de la caractéristique du premier composant, représentative de la valeur BIN de la source lumineuse, dans un premier élément de mémoire ;
d) mesurer la chute de tension aux bornes dudit circuit électronique, lorsqu'un courant électrique d'une intensité prédéterminée le traverse ;
e) déduire la valeur de la caractéristique deuxième composant à partir de la chute de tension mesurée et de la caractéristique du premier composant, préalablement enregistrée dans le premier élément de mémoire ;
f) enregistrer la valeur de la caractéristique du deuxième composant, représentative de la température de l'environnement de la source lumineuse au moment de la mesure, dans un deuxième élément de mémoire ;
g) fournir un courant électrique aux sources lumineuses, l'intensité du courant électrique fourni étant fonction de la valeur BIN de la source et de la température de l'environnement de la source lumineuse.

De préférence, les étapes d) à g) peuvent être répétées à des instants prédéterminés.

Selon un mode de réalisation non couvert par l'invention, un procédé d'alimentation électrique d'au moins une source lumineuse à élément semi-conducteur moyennant un système d'alimentation dans lequel les moyens de pilotage de l'alimentation électrique comprennent des moyens de lecture desdites caractéristiques du premier et deuxième composant et dans lequel le circuit électronique comprend un montage en parallèle d'une première branche comprenant le premier composant, et d'une deuxième branche comprenant le deuxième composant. Chacune des branches du montage en parallèle comprend un montage sélecteur monté en série et en amont dudit premier/deuxième composant et comprenant respectivement une première et une deuxième diode laissant uniquement passer un courant électrique d'une polarité donnée, les diodes des deux branches laissant passer des courants électriques de polarités inverses. Le procédé comprend les étapes suivantes :
aa) mesurer la chute de tension aux bornes dudit circuit électronique, lorsqu'un courant électrique d'une intensité prédéterminée et d'une première polarité passant par la première diode, le traverse ;
bb) déduire la valeur de la caractéristique du premier composant à partir de la chute de tension mesurée ;
cc) enregistrer la valeur de la caractéristique du premier composant, représentative de la valeur BIN de la source lumineuse, dans un premier élément de mémoire ;
dd) mesurer la chute de tension aux bornes dudit circuit électronique, lorsqu'un courant électrique d'une intensité prédéterminée et d'une deuxième polarité, inverse de la première polarité et passant par la deuxième diode, le traverse ;
ee) déduire la valeur de la caractéristique deuxième composant à partir de la chute de tension mesurée ;
ff) enregistrer la valeur de la caractéristique du deuxième composant, représentative de la température de l'environnement de la source lumineuse au moment de la mesure, dans un deuxième élément de mémoire ;
gg) fournir un courant électrique aux sources lumineuses, l'intensité du courant électrique fourni étant fonction de la valeur BIN de la source et de la température de l'environnement de la source lumineuse.

De préférence, les étapes dd) à gg) peuvent être répétées à des instants prédéterminés.

Selon un mode de réalisation non couvert par l'invention, un procédé d'alimentation électrique d'au moins une source lumineuse à élément semi-conducteur moyennant un système d'alimentation, dans lequel les moyens de pilotage de l'alimentation électrique comprennent des moyens de lecture desdites caractéristiques du premier et deuxième composant et dans lequel le circuit électronique comprend un montage en parallèle d'une première branche comprenant le premier composant, et d'une deuxième branche comprenant le deuxième composant. Au moins une des branches du montage en parallèle comprend un montage sélecteur monté en série et en amont du premier/deuxième composant, qui comprend une capacité laissant passer uniquement un courant électrique d'une fréquence prédéterminée, les fréquences pour les deux branches étant différentes. Le procédé comprend les étapes suivantes :
aaa) mesurer la chute de tension aux bornes dudit circuit électronique, lorsqu'un courant électrique d'une intensité prédéterminée et d'une première fréquence passant le montage sélecteur de la première branche, le traverse ;
bbb) déduire la valeur de la caractéristique du premier composant à partir de la chute de tension mesurée ;
ccc) enregistrer la valeur de la caractéristique du premier composant, représentative de la valeur BIN de la source lumineuse, dans un premier élément de mémoire ;
ddd) mesurer la chute de tension aux bornes dudit circuit électronique, lorsqu'un courant électrique d'une intensité prédéterminée et d'une deuxième fréquence passant par le montage sélecteur de la deuxième branche, le traverse ;
eee) déduire la valeur de la caractéristique deuxième composant à partir de la chute de tension mesurée ;
fff) enregistrer la valeur de la caractéristique du deuxième composant, représentative de la température de l'environnement de la source lumineuse au moment de la mesure, dans un deuxième élément de mémoire ;
ggg) fournir un courant électrique aux sources lumineuses, l'intensité du courant électrique fourni étant fonction de la valeur BIN de la source et de la température de l'environnement de la source lumineuse.

De préférence, les étapes ddd) à ggg) peuvent être répétées à des instants prédéterminés.

En utilisant les mesures proposées par la présente invention, il devient possible de réduire le câblage entre un dispositif de pilotage de l'alimentation électrique de sources lumineuses, et un circuit imprimé abritant lesdites sources lumineuses, par rapport à des techniques connues dans l'art. De manière connue, un premier câblage est nécessaire pour garantir l'alimentation des sources lumineuses, et un deuxième câblage dédié est nécessaire pour récupérer l'information BIN des sources lumineuses, qui sont par exemple des diodes électroluminescentes, LEDs. D'autres câblages multiples supplémentaires deviennent nécessaires dans les solutions connues, si des paramètres tels que la température de jonction des LEDs doivent être pris en charge au niveau du dispositif de pilotage. En effet, ces informations sont nécessaires pour piloter l'alimentation des LEDs de manière adéquate. Selon l'invention, ce troisième (ou davantage) câblage dédié deviennent superflus et peut être éliminé, puisque l'information BIN, de température ou autre peut être récupérée par le dispositif de pilotage de l'alimentation électrique moyennant un câblage unique. La réduction de câblages est particulièrement importante dans le cadre de la conception de feux de véhicules automobiles, ou un dispositif de pilotage peut être amené à alimenter plusieurs fonctions lumineuses du véhicule, impliquant autant d'informations BIN, température et autres à récupérer. La réduction du câblage réduit le coût de production et réduit également les soucis de conception liés à la compatibilité électromagnétique d'un module lumineux. Le nombre de connecteurs de part et d'autre du câblage est réduit de pair avec la réduction du câblage.

D'autres caractéristiques et avantages de la présente invention seront mieux compris à l'aide de la description exemplaire et des dessins parmi lesquels :
- la figure 1 est une représentation schématique d'un système d'alimentation électrique;
- la figure 2 est une représentation schématique d'un circuit électronique tel qu'il intervient dans un système d'alimentation électrique selon la figure 1;
- la figure 3 est une représentation schématique d'un autre circuit électronique tel qu'il intervient dans un système d'alimentation électrique selon la figure 1 ;
- la figure 4 est une représentation schématique d'un circuit électronique tel qu'il intervient dans un système d'alimentation électrique selon un mode de réalisation préféré de l'invention ;
- la figure 5 est une représentation schématique de moyens de lecture et d'un circuit électronique tel qu'ils interviennent dans un système d'alimentation électrique selon un mode de réalisation préféré de l'invention ;
- la figure 6 est une représentation schématique d'un circuit électronique tel qu'il intervient dans un système d'alimentation électrique selon un mode de réalisation préféré de l'invention.

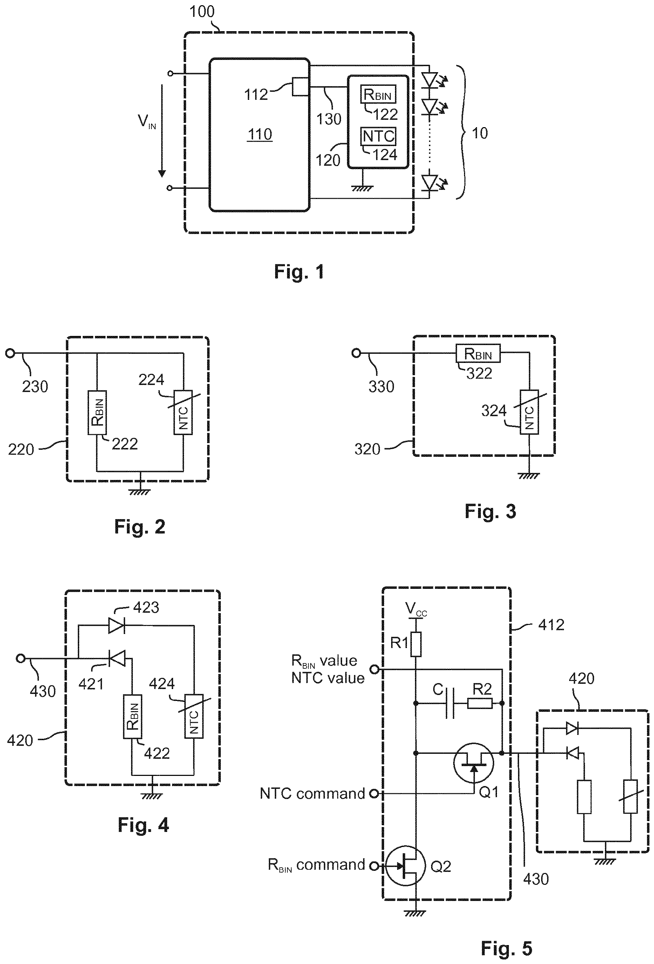

L'illustration de la figure 1 montre un système d'alimentation électrique 100 d'au moins une source lumineuse 10 à élément semi-conducteur. La ou les sources lumineuses sont de préférence, mais de manière non-limitative, des diodes électroluminescentes, LED. Les LEDs 10 réalisent par exemple une fonction lumineuse d'un véhicule automobile au sein d'un module lumineux du véhicule automobile. Il peut s'agir d'une fonction feux diurne, indicateur de direction, feu de position, etc... Le système d'alimentation 100 fait intervenir de manière connue des composants qui ne sont pas illustrés en outre des composants qui sont pertinents pour la description de la présente description. Ainsi, les moyens de pilotage 110 font en général intervenir des circuits convertisseurs, par exemple de type buck, boost, SEPIC, ou autres, adaptés à convertir une tension continue d'entrée Vin, fournie par exemple par une batterie interne au véhicule automobile, en une tension de charge de valeur différente et adaptée à l'alimentation électrique des LEDs.

Dans le système d'alimentation, un conducteur unique 130 relie des moyens de lecture 112 à un circuit électronique 120 indépendant de la branche de charge qui comprend les sources lumineuses 10. Le circuit électronique 120 abrite un premier composant 122 dont une caractéristique mesurable est représentative de ladite valeur BIN de la source, et un deuxième composant 124 dont une caractéristique mesurable est fonction de la température de l'environnement des LEDs. De préférence le premier composant 122 est une résistance Rbin dont la valeur ohmique est représentative de la valeur BIN de la source, et le deuxième composant 124 est un thermistor dont la valeur ohmique est fonction de la température du composant.

La valeur BIN est nécessaire à la bonne configuration des moyens de pilotage 110 lors de l'initialisation de ceux-ci, qui est généralement entreprise lors de l'assemblage d'un projecteur qui intègre le système 100 et la source lumineuse 10. En connaissant la valeur BIN, les moyens de pilotage 110 sont configurés pour fournir un courant électrique d'une intensité adaptée aux LEDs 10. Lors du fonctionnement du projecteur au sein d'un véhicule automobile, la température des LEDs connait des variations dues aux conditions météorologiques extérieures au véhicule, mais également dues au réchauffement des composants électroniques qui est une conséquence de leur fonctionnement. Comme la température de jonction semi-conductrice d'une LED change sa tension directe, il est également nécessaire de fournir une indication de cette température aux moyens de pilotage, afin d'adapter le courant de charge fourni aux LEDs 10. Un thermistor placé à proximité des LEDs, par exemple sur le même circuit imprimé, permet d'obtenir une représentation de la température de l'environnement des LEDs, qui peut être assimilée à leur température de jonction. Le comportement de la résistance ohmique du thermistor 124 en fonction de sa température est une caractéristique inhérente du thermistor. Cette caractéristique est connue est préenregistrée dans un élément de mémoire des moyens de pilotage 110 ou des moyens de lecture 112. En utilisant un fil unique pour récupérer les deux informations, les mesures selon l'invention permettent de faciliter la conception du système d'alimentation, tout en réduisant le coût total des composants nécessaires.

La figure 2 montre un circuit électrique 220, relié par le conducteur unique 230 aux moyens de pilotage de l'alimentation des LEDs, ces deux derniers éléments n'étant pas montrés pour des raisons de clarté. Les moyens de pilotage sont agencés de manière à pouvoir récupérer la donnée BIN, encodée par la résistance Rbin 222, et la température du composant 224, moyennant l'unique fil de connexion 230. Le circuit électronique 220 comprend un montage en parallèle des deux composants 222 et 224. Lors de l'assemblage du projecteur, la température du thermistor équivaut à une température ambiante, située de préférence entre 10 °C et 40 °C. La résistance du thermistor est donc connue à cette température. Lors de l'assemblage, la valeur Rbin, inconnue à cet instant, doit cependant être lue par les moyens de lecture. Ainsi, un courant électrique d'une intensité prédéterminée I est appliqué au circuit électronique 220 par les moyens de pilotage. La chute de tension U observée permet d'obtenir la valeur de la résistance équivalente Req du circuit électronique 220, Req=U/I. Comme Req = (Rbin·Rntc)/(Rbin+Rntc), et comme Rntc est connue puisque la température au moment de la mesure est connue, les moyens de lecture peuvent donc en déduire la valeur Rbin. La valeur Rbin indique la valeur de BIN des LEDs et elle est stockée de préférence dans un élément de mémoire pour l'utiliser lors de la configuration des moyens de pilotage. Lors du fonctionnement du projecteur, la valeur Rbin étant désormais connue, la température est une grandeur inconnue. En effectuant la procédure qui vient d'être décrite, la valeur Rntc, qui donne une indication de la température de l'environnement des LEDs, est déduite à partir de la valeur Req observée, et de la valeur Rbin désormais connue. Afin d'effectuer les calculs qui viennent d'être décrits, les moyens de lecture font intervenir soit un circuit électronique dédié, soit un élément microcontrôleur programmé à cet effet, ainsi qu'un convertisseur analogique/digital. La lecture de la température et l'adaptation de l'intensité du courant électrique fourni aux LEDs, afin que celles-ci émettent flux lumineux constant indépendamment de leur température de jonction, est de préférence effectuée de manière répétée, par exemple périodiquement lors du fonctionnement du système selon l'invention.

La figure 3 montre un autre circuit électrique 320, relié par le conducteur unique 330 aux moyens de pilotage de l'alimentation des LEDs, ces deux derniers éléments n'étant pas montrés pour des raisons de clarté. Les moyens de pilotage sont agencés de manière à récupérer les données BIN, encodée par la résistance Rbin 322, et la température du composant 324 moyennant l'unique fil de connexion 330. Le circuit électronique 320 comprend un montage en série des deux composants 322 et 324. Lors de l'assemblage du projecteur, la température du thermistor équivaut à une température ambiante, située de préférence entre 10 °C et 40 °C. La résistance du thermistor est donc connue à cette température. Lors de l'assemblage, la valeur Rbin, inconnue à cet instant, doit cependant être lue par les moyens de lecture. Ainsi, un courant électrique d'une intensité prédéterminée I est appliqué au circuit électronique 320 par les moyens de pilotage. La chute de tension U observée permet d'obtenir la valeur de la résistance équivalente Req du circuit électronique 320, Req=U/I. Comme Req = Rbin+Rntc, et comme Rntc est connue puisque la température au moment de la mesure est connue, les moyens de lecture peuvent donc en déduire la valeur Rbin. La valeur Rbin indique la valeur de BIN des LEDs et elle est stockée de préférence dans un élément de mémoire pour l'utiliser lors de la configuration des moyens de pilotage. Lors du fonctionnement du projecteur, la valeur Rbin étant désormais connue, la température est une grandeur inconnue. En effectuant la procédure qui vient d'être décrite, la valeur Rntc, qui donne une indication de la température de l'environnement des LEDs, est déduite à partir de la valeur Req observée, et de la valeur Rbin désormais connue.

Les figures 4 à 6 montrent des modes de réalisation préférés selon l'invention dans lesquels le circuit électronique 420, 520 fait intervenir un montage en parallèle d'une première branche comprenant le premier composant, par exemple la résistance Rbin, et d'une deuxième branche comprenant le deuxième composant, par exemple le thermistor NTC. Au moins une des deux branches comprend un montage sélecteur monté en série et en amont du premier et/ou deuxième composant. Le montage sélecteur est configuré pour laisser passer un courant électrique traversant le circuit électronique de manière sélective par la branche en question, en fonction d'une caractéristique du courant électrique. En configurant les moyens de pilotage de manière à injecter à des instants de lecture différents des courants électriques à caractéristiques différentes, il devient alors possible de lire de manière sélective soit l'information BIN soit l'information de température, moyennant l'unique conducteur 430, 530 qui relie le circuit électronique 420, 520 aux moyens de pilotage.

Dans le mode de réalisation illustré par les figures 4 et 5, le circuit électronique 420 comprend les deux branches montées en parallèle et abritant respectivement le premier composant Rbin 422, et le deuxième composant 424. En amont de chacun de ces composant, chaque branche du montage comprend une diode 421, 423. Chacune des diodes laisse passer un courant électrique d'une seule polarité, et les deux diodes laissent passer des courants électriques de polarités inverses. Ainsi, en injectant un courant électrique ayant une première polarité qui passe par la diode 421, mais qui ne passe pas par la diode 423, les moyens de lecture sont aptes à récupérer la valeur Rbin en observant la chute de tension induite par le composant 422. De même, en injectant un courant électrique ayant une deuxième polarité, inverse de la première polarité, qui passe par la diode 423, mais qui ne passe pas par la diode 421, les moyens de lecture sont aptes à récupérer la valeur Rntc en observant la chute de tension induite par le composant 424. Ainsi, à l'assemblage du projecteur, la valeur BIN est récupérée en injectant de manière sélective un courant électrique ayant la polarité adaptée, et lors du fonctionnement du projecteur, la valeur de la température de l'environnement des LEDs est récupérée en injectant de manière sélective un courant électrique ayant une polarité inverse. La figure 5 montre de manière exemplaire des moyens de lecture 412 configurés pour injecter de manière sélective un courant électrique ayant soit une polarité positive ou négative dans le circuit électronique 420. Evidemment, l'homme du métier saura implémenter différents circuits électroniques pour réaliser la même fonctionnalité, sans pour autant sortir du cadre de la présente invention.

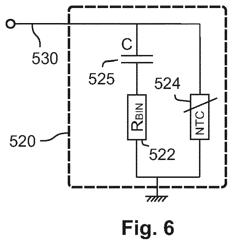

Dans le mode de réalisation illustré par la figure 6, le circuit électronique 520 comprend les deux branches montées en parallèle et abritant respectivement le premier composant Rbin 522, et le deuxième composant 524. En amont du composant 522, le montage comprend une capacité 525. La capacité laisse uniquement passer un courant électrique ayant une fréquence prédéterminée, en fonction de la valeur e la capacité. Lorsqu'un courant continu traverse le circuit électronique 520, le composant 522 n'est donc pas alimenté en courant électrique. Ainsi, en injectant un courant électrique ayant la fréquence requise - par exemple un signal d'horloge - qui passe par la capacité 525, les moyens de lecture sont aptes à récupérer la valeur Rbin en observant la chute de tension induite par le composant 522. A température, la valeur de Rbin est assimilable à la résistance équivalente du circuit 520, tandis que Rntc (connue à température ambiante) est négligeable par rapport à Rbin. De même, en injectant un courant électrique continu, qui passe uniquement par le composant 524, les moyens de lecture sont aptes à récupérer la valeur Rntc en observant la chute de tension induite par le composant 424. Ainsi, à l'assemblage du projecteur, la valeur BIN est récupérée en injectant de manière sélective un courant électrique ayant la fréquence adaptée, et lors du fonctionnement du projecteur, la valeur de la température de l'environnement des LEDs est récupérée en injectant de manière sélective un courant électrique continu. Alternativement, des capacités à valeurs différentes peuvent être placées sur les deux branches, de manière à ce que des courants électriques à fréquences différentes soient utilisés pour récupérer l'information BIN et de température respectivement.

De même, les principes décrits peuvent être étendus à l'encodage et à la récupération de plus de deux caractéristiques des sources lumineuses à l'aide du circuit électronique selon l'invention.

## Revendications

1. Système d'alimentation électrique (100) d'au moins une source lumineuse (10) à élément semi-conducteur d'un véhicule automobile, le système comprenant :
des moyens de pilotage de l'alimentation électrique (110) de ladite source lumineuse, configurés pour fournir un courant électrique à ladite source lumineuse, l'intensité du courant électrique fourni étant fonction d'une valeur BIN de la source et de la température de l'environnement de la source;
un circuit électronique (120, 220, 320, 420, 520) indépendant de ladite source lumineuse, comprenant un premier composant (122, 222, 322, 422, 522) dont une caractéristique mesurable est représentative de ladite valeur BIN de la source, et un deuxième composant (124, 224, 324, 424, 524) dont une caractéristique mesurable est fonction de la température de l'environnement de la source lumineuse,
dans lequel les moyens de pilotage (110) sont agencés pour déterminer lesdites caractéristiques du premier et deuxième composant via un unique fil (130, 230, 330, 430, 530) électriquement conducteur reliant les moyens de pilotage (110) au circuit électronique (120, 220, 320, 420, 520),
**caractérisé en ce que** le circuit électronique (420, 520) comprend un montage en parallèle d'une première branche comprenant le premier composant (422, 522), et d'une deuxième branche comprenant le deuxième composant (424, 524), au moins une des branches comprenant un montage sélecteur (421, 423, 525) monté en série et en amont dudit premier/deuxième composant, le montage sélecteur étant configuré pour laisser passer un courant électrique traversant le circuit électronique (420, 520) de manière sélective par ladite branche, en fonction d'une caractéristique du courant électrique,
et **en ce que** les moyens de pilotage comprennent des moyens de lecture (412) desdites caractéristiques du premier et deuxième composant, configurés pour injecter de manière sélective un courant électrique ayant une caractéristique prédéterminée dans le circuit électronique.

2. Système selon la revendication 1, **caractérisé en ce que** chacune des branches du montage en parallèle comprend un montage sélecteur (421, 423) comprenant respectivement une première et une deuxième diode laissant uniquement passer un courant électrique d'une polarité donnée, les diodes des deux branches laissant passer des courants électriques de polarités inverses, et **en ce que** les moyens de lecture (412) desdites caractéristiques du premier (422) et deuxième (424) composant sont configurés pour :
- mesurer la chute de tension aux bornes dudit circuit électronique (420), lorsqu'un courant électrique d'une intensité prédéterminée et d'une première polarité passant par la première diode, le traverse ;
- déduire la valeur de la caractéristique du premier composant à partir de la chute de tension mesurée ;
- enregistrer la valeur de la caractéristique du premier composant, représentative de la valeur BIN de la source lumineuse, dans un premier élément de mémoire.

3. Système selon la revendication 2, **caractérisé en ce que** les moyens de lecture sont en outre configurés pour :
- mesurer la chute de tension aux bornes dudit circuit électronique (420), lorsqu'un courant électrique d'une intensité prédéterminée et d'une deuxième polarité, inverse de la première polarité et passant par la deuxième diode, le traverse ;
- déduire la valeur de la caractéristique deuxième composant (424) à partir de la chute de tension mesurée ;
- enregistrer la valeur de la caractéristique du deuxième composant, représentative de la température de l'environnement de la source lumineuse au moment de la mesure, dans un deuxième élément de mémoire.

4. Système selon la revendication 1, **caractérisé en ce que** au moins une des branches du montage en parallèle comprend un montage sélecteur (525) qui comprend une capacité laissant passer uniquement un courant électrique d'une fréquence prédéterminée, les fréquences pour les deux branches étant différentes, et **en ce que** les moyens de lecture desdites caractéristiques du premier (522) et deuxième (524) composant sont configurés pour :
- mesurer la chute de tension aux bornes dudit circuit électronique (520), lorsqu'un courant électrique d'une intensité prédéterminée et d'une première fréquence passant le montage sélecteur de la première branche, le traverse ;
- déduire la valeur de la caractéristique du premier composant (522) à partir de la chute de tension mesurée ;
- enregistrer la valeur de la caractéristique du premier composant, représentative de la valeur BIN de la source lumineuse, dans un premier élément de mémoire.

5. Système selon la revendication 4, **caractérisé en ce que** les moyens de lecture sont en outre configurés pour :
- mesurer la chute de tension aux bornes dudit circuit électronique (520), lorsqu'un courant électrique d'une intensité prédéterminée et d'une deuxième fréquence passant par le montage sélecteur de la deuxième branche, le traverse ;
- déduire la valeur de la caractéristique deuxième composant (524) à partir de la chute de tension mesurée ;
- enregistrer la valeur de la caractéristique du deuxième composant, représentative de la température de l'environnement de la source lumineuse au moment de la mesure, dans un deuxième élément de mémoire.

6. Système selon une des revendications 4 ou 5, **caractérisé en ce qu'**uniquement la première branche du montage en parallèle, comprenant le premier composant (524) ayant une caractéristique représentative de la valeur BIN de la source lumineuse, comprend ledit montage sélecteur (525).

7. Système selon une des revendications 1 à 6, **caractérisé en ce que** le premier composant (122, 222, 322, 422, 522) est une résistance dont la valeur ohmique est représentative de la valeur BIN de la source lumineuse.

8. Système selon une des revendications 1 à 7, **caractérisé en ce que** le deuxième composant (124, 224, 324, 424, 524) est un thermistor dont la valeur ohmique dépend de la température du composant.

9. Module lumineux pour un véhicule automobile comprenant au moins une source lumineuse (10) à élément semi-conducteur et un système d'alimentation électrique (100) de ladite source lumineuse, **caractérisé en ce que** le système d'alimentation électrique est conforme à une des revendications 1 à 8.

## Patentansprüche

1. System zur Stromversorgung (100) mindestens einer Halbleiterelementlichtquelle (10) eines Kraftfahrzeugs, wobei das System umfasst:
mittel zum Steuern der Stromversorgung (110) der Lichtquelle, konfiguriert, um der Lichtquelle einen elektrischen Strom zuzuführen, wobei die Intensität des bereitgestellten elektrischen Stroms eine Funktion eines BIN-Wertes der Quelle und der Temperatur der Quellumgebung ist;
eine elektronische Schaltung (120, 220, 320, 320, 420, 520) unabhängig von der Lichtquelle, umfassend eine erste Komponente (122, 222, 322, 322, 322, 422, 522) mit einer messbaren Eigenschaft, die den BIN-Wert der Quelle darstellt, und eine zweite Komponente (124, 224, 324, 324, 324, 424, 524) mit einer messbaren Eigenschaft als Funktion der Temperatur der Lichtquellenumgebung,
wobei die Steuereinrichtung (110) angeordnet ist, um die Eigenschaften der ersten und zweiten Komponente über einen einzigen elektrisch leitenden Draht (130, 230, 330, 430, 530) zu bestimmen, der die Steuereinrichtung (110) mit der elektronischen Schaltung (120, 220, 320, 420, 520) verbindet,
**dadurch gekennzeichnet, dass** die elektronische Schaltung (420, 520) eine Parallelschaltung eines ersten Zweiges mit der ersten Komponente (422, 522) und eines zweiten Zweiges mit der zweiten Komponente (424, 524) umfasst, wobei mindestens einer der Zweige eine Auswahlschaltung (421, 423, 525) umfasst, die in Reihe und
stromaufwärts der ersten/zweiten Komponente geschaltet ist, wobei die Auswahlschaltung konfiguriert ist, um einen elektrischen Strom durch die elektronische Schaltung (420) fließen zu lassen, 520) selektiv durch den Zweig, als Funktion einer Eigenschaft des elektrischen Stroms,
und dadurch, dass die Steuereinrichtung Mittel (412) zum Lesen der Eigenschaften der ersten und zweiten Komponente umfasst, die konfiguriert sind, um selektiv einen elektrischen Strom mit einer vorbestimmten Eigenschaft in die elektronische Schaltung einzuspeisen.

2. System nach Anspruch 1, **dadurch gekennzeichnet, dass** jeder der Zweige der Parallelschaltung eine Auswahlschaltung (421, 423) beinhaltet, die jeweils eine erste und eine zweite Diode umfasst, die nur einen elektrischen Strom einer gegebenen Polarität durchlassen, wobei die Dioden der beiden Zweige den Durchgang von elektrischen Strömen entgegengesetzter Polarität ermöglichen, und dass die Mittel (412) zum Lesen der Eigenschaften der ersten (422) und zweiten (424) Komponente konfiguriert sind:
- Messen des Spannungsabfalls über der elektronischen Schaltung (420), wenn ein elektrischer Strom mit einer vorbestimmten Intensität und einer ersten Polarität, die durch die erste Diode geht, durch sie hindurchgeht;
- Ziehen Sie den Kennwert der ersten Komponente vom gemessenen Spannungsabfall ab;
- Aufzeichnen des charakteristischen Wertes der ersten Komponente, der den BIN-Wert der Lichtquelle darstellt, in einem ersten Speicherelement.

3. System nach Anspruch 2, **dadurch gekennzeichnet, dass** die Lesemittel ferner konfiguriert sind für:
- Messen des Spannungsabfalls über der elektronischen Schaltung (420), wenn ein elektrischer Strom mit einer vorbestimmten Intensität und einer zweiten Polarität, das Umkehren der ersten Polarität und das Durchlaufen der zweiten Diode durch sie hindurch fließt;
- Den Wert der zweiten Komponentencharakteristik (424) vom gemessenen Spannungsabfall abziehen;
- Nehmen Sie den Wert der Charakteristik der zweiten Komponente, der die Temperatur der Lichtquellenumgebung zum Zeitpunkt der Messung darstellt, in einem zweiten Speicherelement auf.

4. System nach Anspruch 1, **dadurch gekennzeichnet, dass** mindestens einer der Zweige der Parallelschaltung eine Auswahlschaltung (525) beinhaltet, die eine Kapazität beinhaltet, die nur einen elektrischen Strom einer vorbestimmten Frequenz durchlassen kann, wobei die Frequenzen für die beiden Zweige unterschiedlich sind, und dass die Mittel zum Lesen der Eigenschaften der ersten (522) und zweiten (524) Komponente konfiguriert sind:
- Messen des Spannungsabfalls über der elektronischen Schaltung (520), wenn ein elektrischer Strom mit einer vorbestimmten Intensität und einer ersten Frequenz, der durch die Selektoranordnung der ersten Kette fließt, diese durchquert;
- Den Kennwert der ersten Komponente (522) vom gemessenen Spannungsabfall abziehen;
- Aufzeichnen des charakteristischen Wertes der ersten Komponente, der den BIN-Wert der Lichtquelle darstellt, in einem ersten Speicherelement.

5. System nach Anspruch 4, **dadurch gekennzeichnet, dass** die Lesemittel ferner konfiguriert sind für:
- Messen des Spannungsabfalls über der elektronischen Schaltung (520), wenn ein elektrischer Strom einer vorbestimmten Intensität und eine zweite Frequenz, die durch die Selektoranordnung der zweiten Saite fließt, durch sie hindurchgeht;
- Den Wert der zweiten Komponentencharakteristik (524) vom gemessenen Spannungsabfall abziehen;
- Nehmen Sie den Wert der Charakteristik der zweiten Komponente, der die Temperatur der Lichtquellenumgebung zum Zeitpunkt der Messung darstellt, in einem zweiten Speicherelement auf.

6. System nach einem der Ansprüche 4 oder 5, **dadurch gekennzeichnet, dass** nur der erste Zweig der Parallelschaltung, der die erste Komponente (524) mit einer für den BIN-Wert der Lichtquelle repräsentativen Eigenschaft umfasst, die Selektorschaltung (525) umfasst.

7. System nach einem der Ansprüche 1 bis 6, **dadurch gekennzeichnet, dass** die erste Komponente (122, 222, 322, 322, 322, 422, 522) ein Widerstand ist, dessen ohmscher Wert repräsentativ für den BIN-Wert der Lichtquelle ist.

8. System nach einem der Ansprüche 1 bis 7, **dadurch gekennzeichnet, dass** die zweite Komponente (124, 224, 324, 324, 324, 424, 424, 424, 524) ein Thermistor ist, dessen ohmscher Wert von der Temperatur der Komponente abhängt.

9. Lichtmodul für ein Kraftfahrzeug, umfassend mindestens eine Halbleiterelementlichtquelle (10) und ein Stromversorgungssystem (100) für die Lichtquelle, **dadurch gekennzeichnet, dass** das Stromversorgungssystem einem der Ansprüche 1 bis 8 entspricht.

## Claims

1. A system for supplying power (100) to at least one semiconductor element light source (10) of a motor vehicle, the system comprising:
means for controlling the power supply (110) of said light source, configured to provide an electrical current to said light source, the intensity of the electrical current provided being a function of a BIN value of the source and the temperature of the source environment; an electronic circuit (120, 220, 320, 320, 420, 520) independent of said light source,
comprising a first component (122, 222, 322, 322, 422, 522) having a measurable characteristic representative of said BIN value of the source, and a second component (124, 224, 324, 324, 424, 524) having a measurable characteristic as a function of the temperature of the light source environment,
wherein the control means (110) is arranged to determine said characteristics of the first and second component via a single electrically conductive wire (130, 230, 330, 430, 530) connecting the control means (110) to the electronic circuit (120, 220, 320, 420, 520), **characterized in that** the electronic circuit (420, 520) comprises a parallel connection of a first branch including the first component (422, 522), and a second branch including the second component (424, 524), at least one of the branches including a selector circuit (421, 423, 525) connected in series and upstream of said first/second component, the selector circuit being configured to allow an electric current to pass through the electronic circuit (420, 520) selectively by said branch, as a function of a characteristic of the electrical current,
and **in that** the control means comprises means (412) for reading said characteristics of the first and second component, configured to selectively inject an electrical current having a predetermined characteristic into the electronic circuit.

2. A system according to claim 1, **characterized in that** each of the branches of the parallel circuit includes a selector circuit (421, 423) comprising respectively a first and a second diode allowing only an electric current of a given polarity to pass through, the diodes of the two branches allowing electric currents of opposite polarity to pass through, and **in that** the means (412) for reading said characteristics of the first (422) and second (424) component are configured to:
- measuring the voltage drop across said electronic circuit (420) when an electrical current of a predetermined intensity and a first polarity passing through the first diode passes through it;
- deduct the characteristic value of the first component from the measured voltage drop;
- record the characteristic value of the first component, representative of the BIN value of the light source, in a first memory element.

3. A system according to claim 2, **characterized in that** the reading means are further configured for:
- measuring the voltage drop across said electronic circuit (420) when an electrical current of a predetermined intensity and a second polarity, reversing the first polarity and passing through the second diode, flows through it;
- deduct the value of the second component characteristic (424) from the measured voltage drop;
- record the value of the characteristic of the second component, representative of the temperature of the light source environment at the time of measurement, in a second memory element.

4. A system according to claim 1, **characterized in that** at least one of the branches of the parallel circuit includes a selector circuit (525) which includes a capacitance allowing only an electrical current of a predetermined frequency to pass through, the frequencies for the two branches being different, and **in that** the means for reading said characteristics of the first (522) and second (524) component are configured to:
- measuring the voltage drop across said electronic circuit (520) when an electrical current of a predetermined intensity and a first frequency passing through the selector assembly of the first string crosses it;
- deduct the characteristic value of the first component (522) from the measured voltage drop;
- record the characteristic value of the first component, representative of the BIN value of the light source, in a first memory element.

5. A system according to claim 4, **characterized in that** the reading means are further configured for:
- measuring the voltage drop across said electronic circuit (520) when an electrical current of a predetermined intensity and a second frequency passing through the selector assembly of the second string passes through it;
- deduct the value of the second component characteristic (524) from the measured voltage drop;
- record the value of the characteristic of the second component, representative of the temperature of the light source environment at the time of measurement, in a second memory element.

6. A system according to one of claims 4 or 5, **characterized in that** only the first branch of the parallel circuit, comprising the first component (524) having a characteristic representative of the BIN value of the light source, comprises said selector circuit (525).

7. A system according to one of claims 1 to 6, **characterized in that** the first component (122, 222, 322, 322, 422, 522) is a resistor whose ohmic value is representative of the BIN value of the light source.

8. System according to one of claims 1 to 7, **characterized in that** the second component (124, 224, 324, 324, 424, 424, 524) is a thermistor whose ohmic value depends on the temperature of the component.

9. A light module for a motor vehicle comprising at least one semiconductor element light source (10) and a power supply system (100) for said light source, **characterized in that** the power supply system complies with one of claims 1 to 8.
